(19) Europäisches Patentamt
European Patent Office
Office européen des brevets

(11) Publication number: **0 373 659 A2**

(12) # EUROPEAN PATENT APPLICATION

(21) Application number: **89123182.1**

(51) Int. Cl.⁵: **C08G 77/50, C08L 83/14**

(22) Date of filing: **14.12.89**

The application is published incomplete as filed (Article 93 (2) EPC). The point in the claim(s) at which the omission obviously occurs has been left blank.

(30) Priority: **15.12.88 JP 317372/89**

(43) Date of publication of application: **20.06.90 Bulletin 90/25**

(84) Designated Contracting States: **BE DE FR GB SE**

(71) Applicant: **DOW CORNING TORAY SILICONE COMPANY, LTD.**
**2-3-16, Muro-machi Nihonbashi Chuo-ku**
**Tokyo 103(JP)**

(72) Inventor: **Masaoka, Hiroshi**
**6, 1-chome, Yushudai Nishi**
**Ichihara Chiba(JP)**
Inventor: **Sasaki, Shosaku**
**25-10, 6-chome, Aobadai**
**Ichihara Chiba(JP)**

(74) Representative: **Spott, Gottfried, Dr. et al**
**Patentanwälte Spott und Puschmann**
**Sendlinger-Tor-Platz 11**
**D-8000 München 2(DE)**

(54) **Method for the preparation of polyorganosiloxane and radiation-curable composition.**

(57) Polyorganosiloxane having the substructure

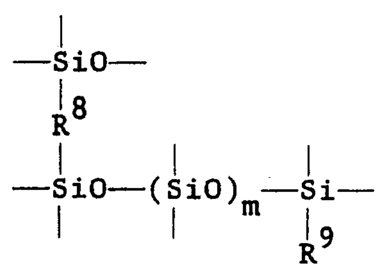

where $R^8$ is a divalent group generated by an addition reaction between SiH and acryloxy, methacryloxy, or alkenyl group and $R^9$ is acryloxy, methacryloxy, or alkenyl, is prepared by an addition method in which an organopolysiloxane having two kinds of unsaturated groups selected from acryloxy, methacryloxy, and alkenyl and organohydrogenpolysiloxane are reacted in the presence of a platinum-type catalyst. These organopolysiloxanes are prepared without gelation and the method is highly efficient.

Radiation-curable compositions based on the polyorganosiloxane are characterized by a rapid cure upon exposure to radiation, while resisting curing inhibition even in the presence of oxygen, to give a cured material whose cured surface is slightly subject to time-dependent changes, and in particular whose peeling or release force undergoes little variation with the passage of time.

EP 0 373 659 A2

# METHOD FOR THE PREPARATION OF POLYORGANOSILOXANE AND RADIATION-CURABLE COMPOSITION

The present invention relates to a method for the preparation of a polyorganosiloxane and to a radiation-curable composition based on this polyorganosiloxane . More particularly, the present invention relates both to a method for the preparation of a polyorganosiloxane having the acryloxy and/or methacryloxy group in the molecule and to a radiation-curable composition based on this polymer.

Organopolysiloxane containing the acryloxy or methacryloxy group [also identified below as the (meth)-acryloxy group] in the molecule is already known, and a large number of radiation-curable compositions employing such organopolysiloxane has been proposed. In the present context, radiation denotes light with a wavelength of 100 to 400 nanometres (ultraviolet light), electron beams, visible light, infrared radiation, X-rays, and gamma-rays.

For example, methods for the synthesis of (meth)acryloxy-containing organopolysiloxane as well as radiation-curable compositions based on same are disclosed in Japanese Patent Application Laid Open [Kokai] Number 48-47997 [47,997/73], Japanese Patent Application Laid Open Number 48-47998 [47,998/73], Japanese Patent Application Laid Open Number 48-47999 [47,999/73], Japanese Patent Application Laid Open Number 48-48000 [48,000/73], and Japanese Patent Application Laid Open Number 56-86992 [86,992/81].

However, the curing of radiation-curable compositions based on such (meth)acryloxy-containing organopolysiloxane is readily inhibited by oxygen. As a result, an extremely slow cure is encountered when curing is carried out in the presence of oxygen.

Moreover, when the (meth)acryloxy group content is raised in over to increase the curing rate, the quantity of additive, such as photosensitizer, peroxide, and the like, must also be increased. As a result, when used as a mold-release or release film, the mold-release or peeling performance is poor, and the residual adhesion is reduced.

The present invention, taking as its object a solution to the aforementioned problems, introduces both a method for the preparation of polyorganosiloxane which resists curing inhibition by oxygen, as well as a radiation-curable composition based on said polyorganosiloxane.

The aforesaid object is achieved by a method for the preparation of a polyorganosiloxane comprising an addition reaction, in the presence of a platinum-type catalyst, between (A) organopolysiloxane containing in each molecule at least 1 siloxane unit as represented by the formula

$R^1_aR^2SiO_{(3-a)/2}$

and at least 1 siloxane unit as represented by the formula

$R^3_bR^4SiO_{(3-b)/2}$

wherein $R^1$ and $R^3$ are independently a monovalent hydrocarbon group which does not contain aliphatically unsaturated bonds; $R^2$ and $R^4$ are independently an unsaturated group selected from the group consisting of acryloxy groups of the formula

$-R^5OC(O)CH=CH_2$ ,

methacryloxy groups of the formula

$-R^6OC(O)C(CH_3)=CH_2$,

and alkenyl groups wherein $R^5$ and $R^6$ are independently an alkylene group, with the proviso that in the molecules of

(A) $R^2$ and $R^4$ are different types of groups; and a and b is 1 or 2 and

(B) organohydrogenpolysiloxane having in each molecule at least 1 siloxane unit as represented by

$R^7_cHSiO_{(3-c)/2}$

wherein $R^7$ is a monovalent hydrocarbon group which does not contain aliphatically unsaturated bonds, and c is 1 or 2, producing (C) polyorganosiloxane which contains in each molecule at least one substructure as represented by

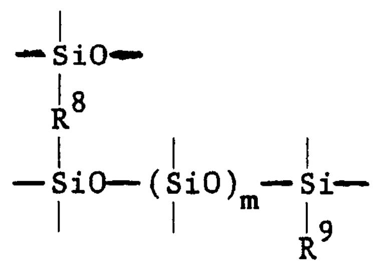

wherein $R^8$ is a divalent organic group generated by an addition reaction between the SiH group of organohydrogenpolysiloxane (B) and an unsaturated group of organopolysiloxane (A) selected from the group consisting of acryloxy groups of the formula
$-R^5OC(O)CH=CH_2$ ,
methacryloxy groups of the formula
$-R^6OC(O)C(CH_3)=CH_2$ ,
or alkenyl groups wherein $R^5$ and $R^6$ are alkylene groups;
$R^9$ is an unsaturated group selected from the group consisting of acryloxy groups of the formula
$-R^5OC(O)CH=CH_2$ ,
methacryloxy groups of the formula
$-R^6OC(O)C(CH_3)=CH_2$ ,
and alkenyl groups; and m is an integer with a value of at least zero.

This invention also relates to the polyorganosiloxane and radiation-curable compositions based on the aforesaid polyorganosiloxane.

To explain the present invention's method for the preparation of polyorganosiloxane in greater detail, the organopolysiloxane of component (A) comprises organopolysiloxane containing in each molecule at least 1 unit as represented by the formula
$R^1{}_aR^2SiO_{(3-a)/2}$
and at least 1 unit as represented by the formula
$R^3{}_bR^4SiO_{(3-b)/2}$.
In the preceding formulas, $R^1$ and $R^3$ comprise monovalent hydrocarbon groups which lack aliphatically unsaturated bonding. These are exemplified by alkyl groups such as methyl, ethyl, propyl, and butyl; aryl groups such as phenyl, tolyl, and naphthyl; and haloalkyl groups such as chloromethyl and trifluoropropyl. Alkyl groups are preferred from the standpoint of ease of synthesis. $R^1$ and $R^3$ may be replaced in small quantities by alkoxy groups such as methoxy, ethoxy, and propoxy; by the hydroxyl group; or by halogen atoms such as bromine or chlorine.

$R^2$ and $R^4$ are groups selected from the set comprising groups as represented by $-R^5OC(O)CH=CH_2$, groups as represented by $-R^6OC(O)C(CH_3)=CH_2$, and alkenyl groups, wherein $R^5$ and $R^6$ are alkylene groups. These alkylene groups are exemplified by methylene, ethylene, propylene, isopropylene, butylene, isobutylene, and heptylene, and alkylene groups having 1 to 6 carbons are preferred. Alkenyl groups in this regard are exemplified by vinyl, allyl, propenyl, hexenyl, and decenyl, and alkenyl groups having 2 to 12 carbons are preferred. Furthermore, a and b = 1 or 2, and $R^2$ and $R^4$ must be different types of groups.

The basis for this is as follows. If these groups $R^2$ and $R^4$ were not different, then all the groups would have the same reactivity in the addition reaction between $R^2$ and/or $R^4$ in component (A) and the silicon-bonded hydrogen atoms in the organohydrogenpolysiloxane comprising component (B). All the groups would react and gelation would ensue. Thus, making the groups $R^2$ and $R^4$ of different types causes a difference in reactivity with silicon-bonded hydrogen atoms: the more reactive groups participate in the addition reaction while the other groups do not react. Gelation does not occur, which results in a very efficient preparation of the target organopolysiloxane-type polymer. Here, groups are regarded as different when they have different reactive groups among alkenyl, methacryloxy, and acryloxy. In addition, even if both are alkenyl groups or (meth)acryloxyalkylene groups, the groups are regarded as different when they have different numbers of carbons in their alkylene groups. It is preferred that the difference be based on different reactive groups from among alkenyl, methacryloxy, and acryloxy.

The addition reactivity with the Si-bonded hydrogen atom in the presence of a platinum catalyst generally obeys the following sequence:
alkenyl group $\gg$ methacryloxy group $>$ acryloxy group. The unsaturated bond in the acryloxy group, because it has a lower electron density than the vinyl group and is more resonance stabilized, has a lower addition reactivity for the SiH group. The unsaturated bond in the methacryloxy group has a lower addition

reactivity for SiH than the vinyl group for the same reason. Furthermore, the acryloxy group, lacking the electron-donating methyl group on the double bond, therefore has a lower electron density than the methacryloxy group and thus the inferior addition reactivity for SiH.

On the other hand, the radiation-induced polymerizability (crosslinkability) is known to obey the following sequence (see table below):
alkenyl group ≪ methacryloxy group < acryloxy group.

| Activation Energy for the Radical Propagation Reaction | |
|---|---|
| ($kJ\ mol^{-1}\ s^{-1}$) | |
| methyl acrylate | 19.7[1)] |
| methyl methacrylate | 29.5[2)] |
| ethylene | 34.3[3)] |

1) J. Polym. Sci., 39, 313 (1959).
2) J. Am. Chem. Soc., 79, 2996 (1957).
3) J. Macromol. Sci., A11, 967 (1977).

According, the combination of an alkenyl group and the group represented by $-R^5OC(O)CH=CH_2$; the combination of the group represented by $-R^5OC(O)CH=CH_2$ and the group represented by $-R^6OC(O)C(CH_3)=CH_2$; the combination of an alkenyl group and the group represented by $-R^6OC(O)C(CH_3)=CH_2$; and the combination of the three types of groups [alkenyl, the group represented by $-R^6OC(O)C(CH_3)=CH_2$, and the group represented by $-R^6OC(O)C(CH_3)=CH_2$] are preferred for $R^2$ and $R^4$. From the standpoint of preventing gelation, it is preferred that, on a per molecule basis, the content of siloxane units having groups with the higher addition reactivity be less than that of siloxane units having groups with the lower addition reactivity. In fact, the presence of only 1 siloxane unit per molecule with the higher addition reactivity is even more preferred.

The group $R^2$ may comprise only the same type or may comprise different types within the single molecule. Likewise, the group $R^4$ may comprise only a single type or may comprise different types within the single molecule.

The organopolysiloxane of component (A) may be constituted of only the two types of siloxane units as described above, but it may also contain other siloxane units. Such other siloxane units are exemplified by units as represented by the following formula
$R^{10}{}_eSiO_{(4-e)/2}$.
$R^{10}$ in the preceding formula is a monovalent hydrocarbon group which lacks aliphatically unsaturated bonds, and $e$ = zero, 1, 2, or 3. The group $R^{10}$, monovalent hydrocarbon groups lacking aliphatically unsaturated bonding, is exemplified as for $R^1$ and $R^3$. Furthermore, $R^{10}$ may be replaced in small quantities by alkoxy groups such as methoxy, ethoxy, and propoxy; by the hydroxyl group; or by halogen atoms such as bromine or chlorine.

However, from the standpoint of preventing the oxygen inhibition of curing, the dispersion or scattering of the (meth)acryloxy groups in the organopolysiloxane-type polymer (C) obtained by the present invention's method of preparation is strongly unpreferred. Consequently, it is preferred that said other siloxane units be present in small quantities, while it is even more preferred that said other siloxane units either be absent or be more or less limited to end-blocking siloxane units in the form of triorganosiloxy units.

The structure of component (A) is not critical, but linear and cyclic configurations are preferred. Furthermore, the total number of siloxane units in component (A) is also not critical, but, from the standpoint of the addition reactivity with component (B), values of 2 to 500 are preferred while values of 2 to 200 are even more preferred.

Examples of organopolysiloxanes which may comprise this component are as follows:
trimethylsiloxy-terminated methylvinylsiloxane-methyl(gamma-acryloxypropyl)siloxane copolymers,
trimethylsiloxy-terminated methyl (gamma-methacryloxypropyl)-siloxane-methyl(gamma-acryloxypropyl)-siloxane copolymers,
hydroxyl-terminated methylvinylsiloxane-methyl(gamma-acryloxypropyl)siloxane copolymers,
hydroxyl-terminated methyl(gamma-methacryloxypropyl)siloxane-methyl(gamma-acryloxypropyl)siloxane copolymers,
trimethylsiloxy-terminated methylvinylsiloxane-methyl(gamma-methacryloxypropyl)siloxane copolymers,

cyclic methylvinylsiloxane-methyl(gamma-acryloxypropyl)siloxane copolymers,
cyclic methylvinylsiloxane-methyl(gamma-methacryloxypropyl)-siloxane copolymers,
cyclic methyl(gamma-methacryloxypropyl)siloxane-methyl(gamma-acryloxypropyl)siloxane copolymers,
cyclic dimethylsiloxane-methylvinylsiloxane-methyl(gamma-acryloxypropyl)siloxane copolymers,
trimethylsiloxy-terminated dimethylsiloxane-methylvinylsiloxane-methyl(gamma-acryloxypropyl)siloxane copolymers,
cyclic methylvinylsiloxane-methyl(gamma-acryloxypropyl)siloxane-methyl(gamma-methacryloxypropyl)-siloxane copolymers,
trimethylsiloxy-terminated methylvinylsiloxane-methyl(gamma-acryloxypropyl)siloxane-methyl(gamma-methacryloxypropyl)-siloxane copolymers,
cyclic dimethylsiloxane-methylvinylsiloxane-methyl(gamma-acryloxypropyl)siloxane-methyl(gamma-methacryloxypropyl)-siloxane copolymers, and
trimethylsiloxy-terminated dimethylsiloxane-methylvinylsiloxane-methyl(gamma-acryloxypropyl)siloxane-methyl(gamma-methacryloxypropyl)siloxane copolymers.

The organohydrogenpolysiloxane comprising component (B) must have at least one unit as represented by the following formula

$R^7{}_cHSiO_{(3-c)/2}$

in each molecule. In the above formula, $R^7$ comprises monovalent hydrocarbon groups which lack aliphatically unsaturated bonding. This is exemplified as for $R^1$ and $R^3$. Furthermore, $R^7$ may be replaced in small quantities by alkoxy groups such as methoxy, ethoxy, and propoxy; by the hydroxyl group; or by halogen atoms such as bromine or chlorine. $c$ = one or two.

The organohydrogenpolysiloxane comprising component (B) may be constituted of only said organohydrogensiloxane units, but may also contain other siloxane units. The presence of other siloxane units is in fact preferred. These other siloxane units are exemplified by units having the following formula.

$R^{11}{}_fSiO_{(4-f)/2}$

In the preceding formula, $R^{11}$ is a monovalent hydrocarbon group lacking aliphatically unsaturated bonding, and $f$ = zero, 1, 2, or 3. $f$ = 2 or 3 is preferred. $R^{11}$, monovalent hydrocarbon groups lacking aliphatically unsaturated bonding, is exemplified as for $R^1$ and $R^3$. In the case, for example, of application of the present invention's composition as a mold-release or release agent, $R^{11}$ is preferably alkyl and more preferably is methyl. Furthermore, $R^{11}$ may be replaced in small quantities by alkoxy groups such as methoxy, ethoxy, or propoxy; or by halogen atoms such as bromine or chlorine.

The structure of component (B) is not critical, but liner and cyclic configurations are preferred. The total number of siloxane units in component (B) is again not critical, but, from the standpoint of the addition reactivity with component (A), values of 10 to 2,000 are preferred.

Organopolysiloxanes which may comprise this component are exemplified as follows:
dimethylhydrogensiloxy-terminated dimethylsiloxane-methylhydrogensiloxane copolymers,
trimethylsiloxy-terminated dimethylsiloxane-methylhydrogensiloxane copolymers,
dimethylphenylsiloxy-terminated dimethylsiloxane-methylhydrogen-siloxane copolymers,
trimethylsiloxy-terminated methylhydrogenpolysiloxanes, and methylhydrogenpolysiloxane cyclics.

In the present invention's method for the preparation of polyorganosiloxane, the aforementioned organopolysiloxane comprising component (A) and the aforementioned organohydrogenpolysiloxane comprising component (B) are addition-reacted in the presence of a platinum-type catalyst to afford (C) polyorganosiloxane which contains in each molecule at least one substructure as represented by Formula 1. The value of $m$ in Formula 1 will exceed zero when the organopolysiloxane comprising component (A) contains units other than units as represented by Formula 2 and units as represented by Formula 3.

With regard to the various groups bonded in the substructure as represented by the formula

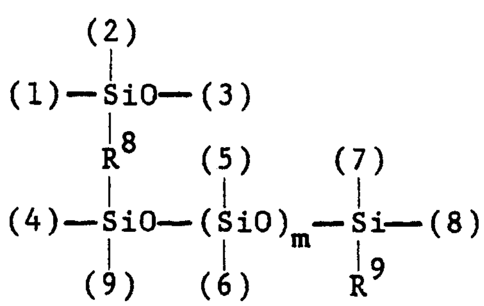

Formula 1

(1) to (3) depend on the structure of the organohydrogenpoly-siloxane comprising component (B). Thus, when c = 1 for component (B), (2) is bonded to $R^7$, and (1) is bonded to an oxygen atom while (3) is bonded to a silicon atom, thus forming the siloxane chain. On the other hand, when c = 2, (1) and (2) are bonded to $R^7$ while (3) is bonded to a silicon atom. (4) through (9) depend on the structure of the organopolysiloxane comprising component (A). Thus, (5), (6), (8), and (9) are either bonded to a monovalent hydrocarbon group lacking aliphatically unsaturated bonds or is bonded to an oxygen atom to form a siloxane chain. (4) and (7) are bonded to a monovalent hydrocarbon group lacking aliphatically unsaturated bonding. The monovalent hydrocarbon groups lacking aliphatically unsaturated bonding in (4) through (9) are $R^1$ and $R^3$. Furthermore, (8) and (9) may form a cyclic via an oxygen atom or an organopolysiloxanylene group.

With regard to the reaction ratio between the aforementioned organopolysiloxane comprising component (A) and organohydrogenpolysiloxane comprising component (B), at least 1 mole unsaturated groups with the higher addition reactivity in the organopolysiloxane comprising component (A) should be present per 1 mole SiH groups in the organohydrogenpolysiloxane comprising component (B).

Examples of the platinum-type catalyst are microparticulate platinum, microparticulate platinum adsorbed on a finely divided carbon support, chloroplatinic acid, alcohol-modified chloroplatinic acid, chloroplatinic acid/olefin complexes, chloroplatinic acid/vinylsiloxane coordination compounds, platinum black, palladium catalysts, rhodium catalysts, and the like. While the quantity of addition of said platinum-type catalyst is not critical, as a general matter 1 to 1,000 ppm as platinum-type metal proper is used based on the total quantity of components (A) and (B). Platinum catalysts are preferred.

The reaction temperature is preferably 0 to 180 °C and more preferably is 40 to 150 °C. The reaction time is not critical, but times of 10 minutes to 15 hours are preferred.

The reaction may be conducted at ambient, reduced, or elevated pressures, and may be run in the air or under an inert gas. In addition, while this reaction can be run as a solventless system, it is preferred from the standpoint of reaction temperature control and gelation inhibition that the reaction be run in a solvent inert with regard to the addition reaction. Examples in this regard are aromatic hydrocarbon solvents such as benzene, toluene, and xylene, and saturated hydrocarbon solvents such as hexane and heptane. Moreover, in order to prevent (meth)acryloxy group gelation, the reaction should be run with the addition of a polymerization inhibitor such as methoxyphenol, phenothiazine, or hydroquinone.

The radiation-curable composition comprises the polyorganosiloxaner thus obtained either by itself or with the addition of other additives within a range which does not compromise the characteristics of the present invention.

Said other additives are exemplified by photosensitizers such as acetophenone, propiophenone, Michler's ketone, benzophenone, ethylbenzophenone, benzoquinone, p-diacetylbenzene, diacetylbenzene, 1,3-diphenylacetone, xanthone, fluorenone, benzaldehyde, anthraquinone, carbazole, 3-methylacetophenone, 4-chlorobenzophenone, 4,4′-dimethoxybenzo-phenone, and benzofuran; polymerization initiators such as benzoyl peroxide, dicumyl peroxide, and butyl peroxide; inhibitors of oxygen curing inhibition such as diethylamine, diisopropylamine, dibutylamine, diethylaminoethanol, and piperidine; polymerization inhibitors such as alkoxyphenols, catechols, hydroquinones, and phenothiazine; reactive diluents in order to reduce the composition's viscosity such as hexanediol acrylate and trimethylolpropane triacrylate; organic solvents; organopolysiloxanes; fillers such as fumed silica and precipitated silica; and colorants.

The radiation-curable composition of the present invention is cured by exposure to light with a wavelength of 100 to 400 nanometres (ultraviolet), an electron beam, visible light, infrared radiation, x-rays, or gamma-radiation.

Ultraviolet radiation sources are exemplified by xenon lamps and low-, medium-, and high-pressure mercury lamps. Electron beam sources are exemplified by devices which generate a continuous curtain beam from a linear filament.

The radiation-curable composition of the present invention can be used as a release agent, mold-release agent, coating, paint, or adhesive for various substrates such as glasses, ceramics, metals, resins, papers, and fibers.

The present invention is explained in greater detail in the following through illustrative examples.

## EXAMPLE 1

The mixture of 10.0 g (46 mmol) gamma-acryloxypropyl-methyldimethoxysilane, 3.5 g (15 mmol) gamma-methacryloxypropyl-methyldimethoxysilane, and 20 mL toluene was dripped with stirring into 20 mL 10 weight% aqueous hydrochloric acid in order to carry out co-hydrolysis at 50 °C. After hydrolysis, the

organic layer was washed with water to neutrality, separated and combined with anhydrous magnesium sulfate, and dried at 40° C. Filtration and removal of the toluene in vacuo afforded Organopolysiloxane A, whose main component is given by the following formula.

Organopolysiloxane A

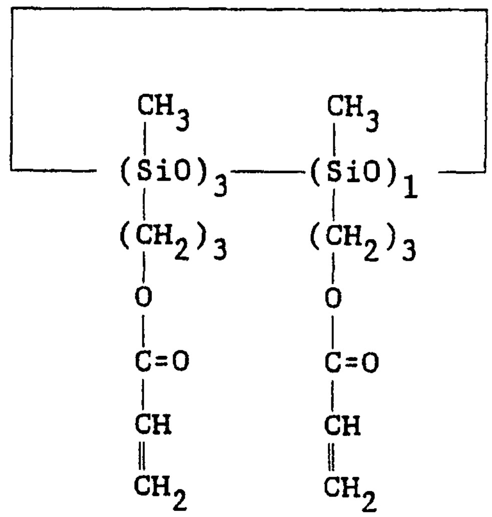

The following were then charged to a 100 mL four-neck flask equipped with a stirrer, thermometer, addition funnel, and Dimroth condenser: 10 g (containing 14 mmol methacryloxy groups) Organopolysiloxane A, 20 mL toluene, 1.5 milligrams chloroplatinic acid, and 6 milligrams para-methoxyphenol. While maintaining a temperature of 90 to 95° C, the following mixture was dripped in over approximately 30 minutes: 20 mL toluene and 20.8 g (containing 14 mmol SiH groups) trimethylsilyl-terminated organohydrogenpolysiloxane (average degree of polymerization = 200) constituted of 95 mol% dimethylsiloxane units and 5 mol% methylhydrogensiloxane units. After completion of this addition, the reaction was continued for an additional 2 hours by stirring at 90 to 95° C. Completion of the reaction was confirmed by SiH group disappearance by the silver nitrate color reaction.

After completion of the reaction, the toluene was removed by distillation in vacuo to give Sample 1A. With regard to the structure of Sample 1A, it was confirmed by 1H-NMR, 13C-NMR, 29Si-NMR, and IR spectral analysis to be polyorganosiloxane (Sample 1A) whose main component had the following formula.

Sample 1A

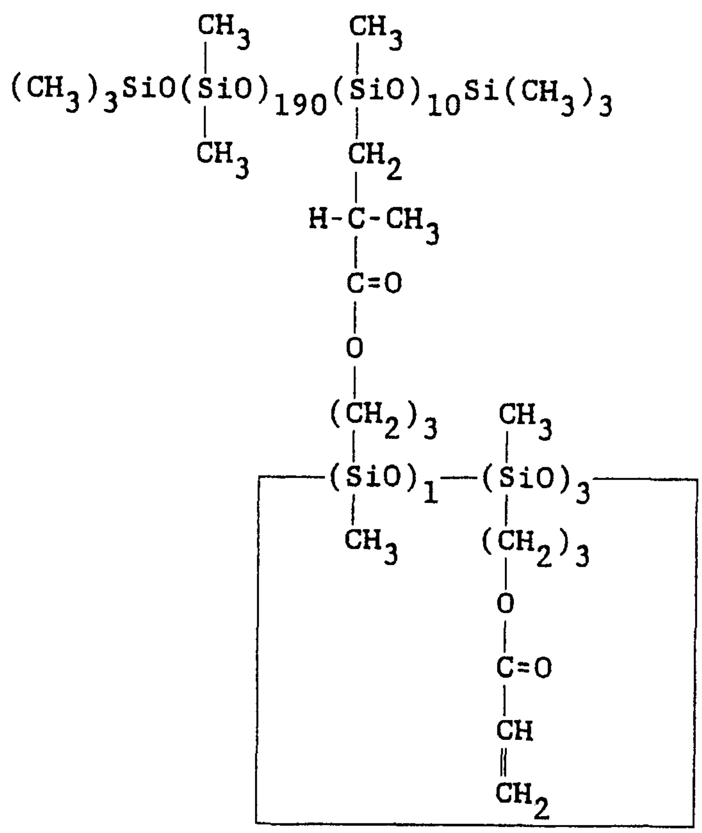

In the comparison example, organopolysiloxane (Sample 1B) was synthesized which contained acryloxy groups in a quantity equimolar with Sample 1A.

Sample 1B

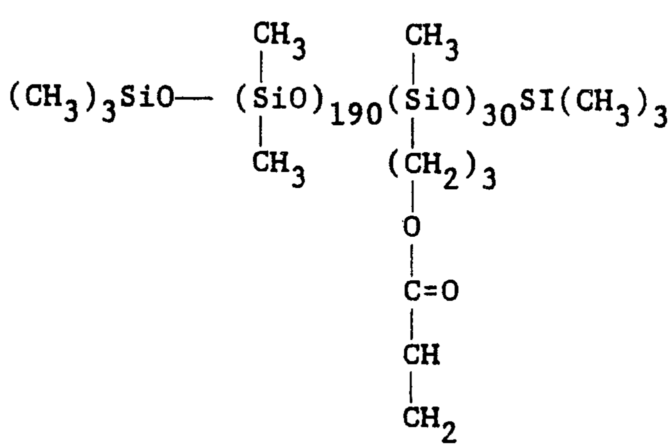

The UV and electron beam curabilities were examined by respectively coating Sample 1A and Sample 1B at 1 g/m2 on polyethylene-laminated paper. In the case of the UV experiments, a composition was prepared by the addition of 2 weight% 2-methyl-2-propiophenone as sensitizer.

The UV source was a 160 W/cm high-pressure mercury lamp, with exposure in air at a distance of 9 cm from the lamp surface. The electron-beam device used a curtain beam configuration: exposure was carried out at an output voltage of 165 kilovolts and current of 2.5 milliamperes in an atmosphere containing 300 ppm oxygen.

To test the curability, the UV exposure time (seconds) and electron beam dosage required for elimination of surface tack (manual rubbing of the cured film) was measured, and these results are reported in Table 1.

TABLE 1

| Radiation-curable Polymer | Radiation Dosage Required For Curing | |
|---|---|---|
| | UV (seconds) | electron beam (Mrad) |
| Sample 1A | 0.21 | 2 |
| Sample 1B | 1.30 | 6 |

Sample 1A and Sample 1B were also tested as follows for their releaseability and residual adhesion. Sample 1A and Sample 1B were respectively coated at 1.0 g/m2 on polyethylene-laminated paper, and Sample 1A was then exposed to a 2 Mrad electron beam and Sample 1B to a 6 Mrad electron beam in order to prepare the cured films. A pressure-sensitive adhesive (Oribine BPS-5127, solvent-based acrylic pressure-sensitive adhesive from Toyo Ink Mfg. Company, Limited) was then coated at a wet thickness of 70 micrometers on the surface of the silicone films, followed by drying in a hot-air current for 2 minutes at 70° C and cooling to room temperature. This was then overlaid with a paper surface and pressed with a 2 kg rubber roller, and the laminate was subsequently maintained for 24 or 240 hours at 25° C. Using a Tensilon, the laminate was peeled at 180 degrees at a rate of 0.3 m/minute in order to determine the force required for peeling. These results are reported in Table 2.

TABLE 2

| Radiation-curable Polymer | Peeling Resistance (g/5 cm) | |
|---|---|---|
| | 24 hours | 240 hours |
| Sample 1A | 38 | 39 |
| Sample 1B | 26 | 192 |

The residual adhesion was determined as follows on cured films obtained by the above-described method.

Nitto Polyester Tape 31B (from Nitto Electric Industrial Company, Limited) was adhered on the cured film and pressed down by 1 pass (forward and back) with a 2 kg roller, and the assembly thus obtained was aged for 20 hours at 70° C under a load of 20 g/cm2. The tape was then peeled off and placed on a stainless steel plate (No. 280). The value reported in Table 3 is the adhesive force at this point as a percentage referred to the adhesive force for 31B tape processed as above but initially adhered on a teflon plate.

TABLE 3

| Radiation-Curable Polymer | Residual Adhesion (%) |
|---|---|
| Sample 1A | 96 |
| Sample 1B | 71 |

As Tables 2 and 3 make clear, Sample 1A of the present invention forms a well-cured film upon exposure to a 2 Mrad electron beam.

EXAMPLE 2

Organopolysiloxane B, whose main component had the following formula, was prepared by the copolymerization of a mixture comprising 20.0 g (92 mmol) gamma-acryloxypropylmethyl-dimethoxysilane, 0.79 g (containing 9.2 mmol vinyl groups) tetramethyltetravinylcyclotetrasiloxane, 0.79 g (9.2 mmol) hexamethyldisiloxane, and 1.0 g water using trifluoromethane-sulfonic acid as the catalyst.

Organopolysiloxane B

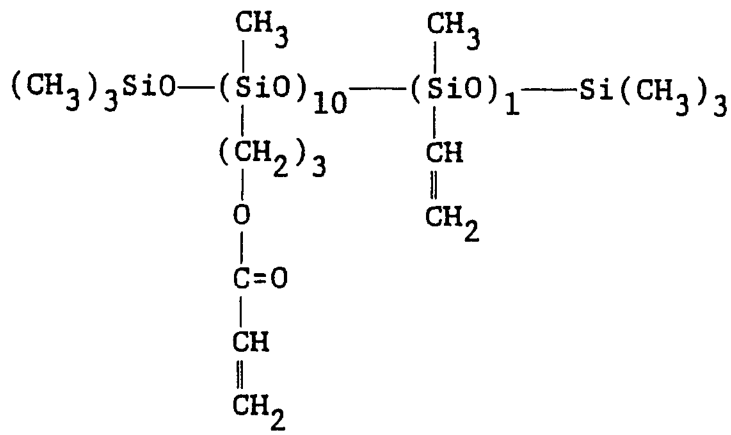

Sample 2A, polyorganosiloxane whose main component had the following formula, was then synthesized by a reaction as in Example 1 of 10 g Organopolysiloxane B (containing 5.08 mmol vinyl groups) and 7.5 g (containing 5.03 mmol SiH groups) trimethylsilyl-terminated organohydrogenpoly-siloxane having an average degree of polymerization of 200 and constituted of 95 mol% dimethylsiloxane units and 5 mol% methylhydrogensiloxane units.

Sample 2A

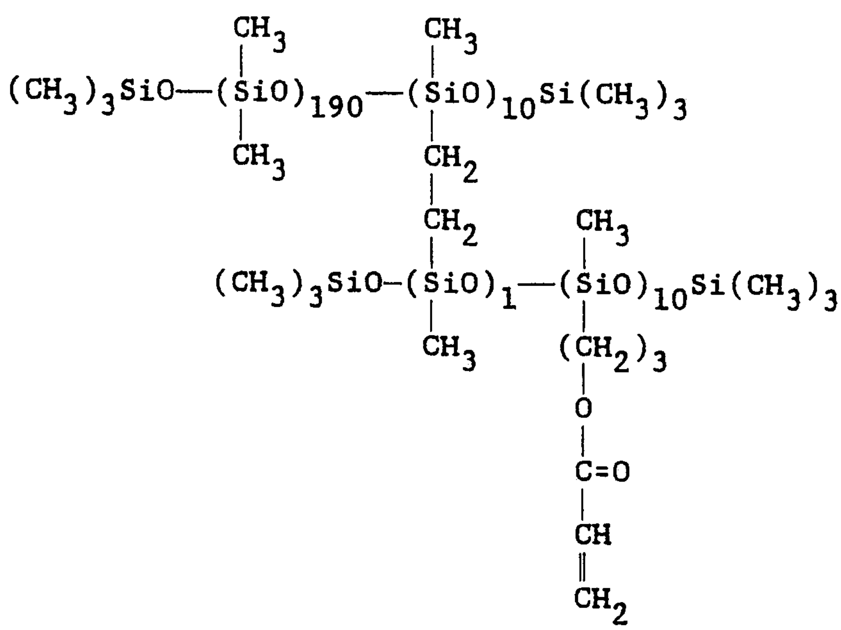

In the comparison example, a Sample 2B was synthesized in the form of organopolysiloxane having acryloxy groups equimolar with Sample 2A.

Sample 2B

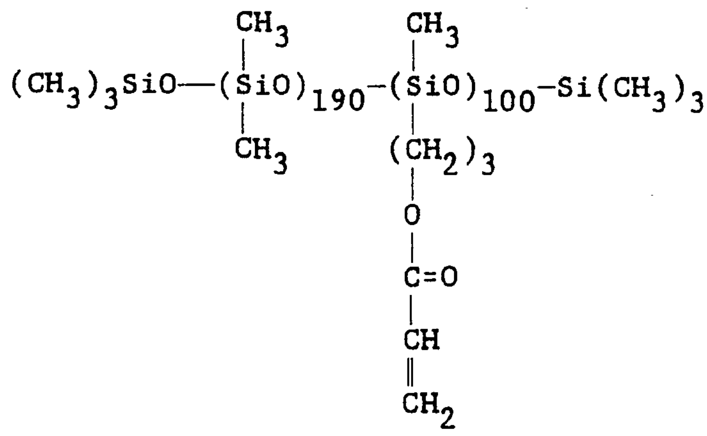

The curability of Samples 2A and 2B was investigated as in Example 1, and these results are reported in Table 4.

TABLE 4

| Radiation-Curable Polymer | Radiation Dosage Required For Curing | |
|---|---|---|
| | UV (seconds) | Electron Beam (Mrad) |
| Sample 2A | 0.1 | 0.8 |
| Sample 2B | 1.1 | 3.0 |

A composition was also prepared by the addition to Sample 2A of 2 weight% 2-methyl-2-propiophenone as photosensitizer, and this composition was coated to an add-on of 1.0 g/m2 onto stainless steel plate, copper plate, aluminum plate, acrylic resin plate, and glass plate. Curing was carried out by exposure to ultraviolet radiation to afford, in all cases, cured films evidencing an excellent adherence. The obtained films were strong, without surface tack, and had excellent water repellencies.

EXAMPLE 3

Organopolysiloxane C, whose main component had the following formula, was prepared by the copolymerization of a mixture of 10 g (53 mmol) alpha-acryloxymethylmethyldimethoxy-silane, 3.58 g (18 mmol) alpha-methacryloxymethylmethyldi-methoxy silane, 2.68 g (18 mmol) hexamethyldisiloxane, and 1.0 g water.

Organopolysiloxane C

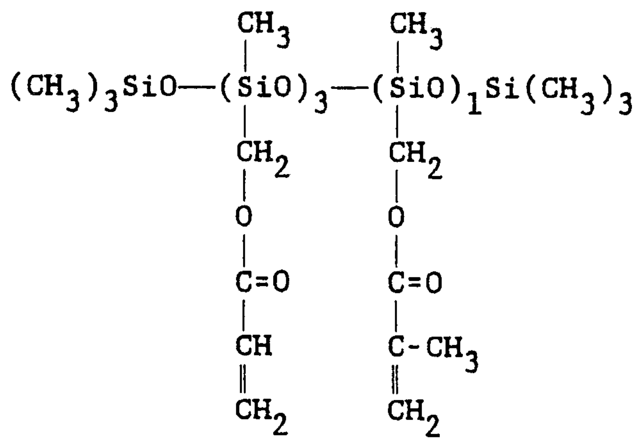

Sample 3A, a polyorganosiloxane whose main component had the following formula, was then prepared as in Example 1 using 10 g (containing 13.3 mmol methacryloxy groups) Organopolysiloxane C and 19.2 g (containing 12.9 mmol SiH groups) trimethylsilyl-terminated organohydrogenpolysiloxane having an average degree of polymerization of 200 and constituted of 95 mol% dimethylsiloxane units and 5 mol% methylhydrogensiloxane units.

Sample 3A

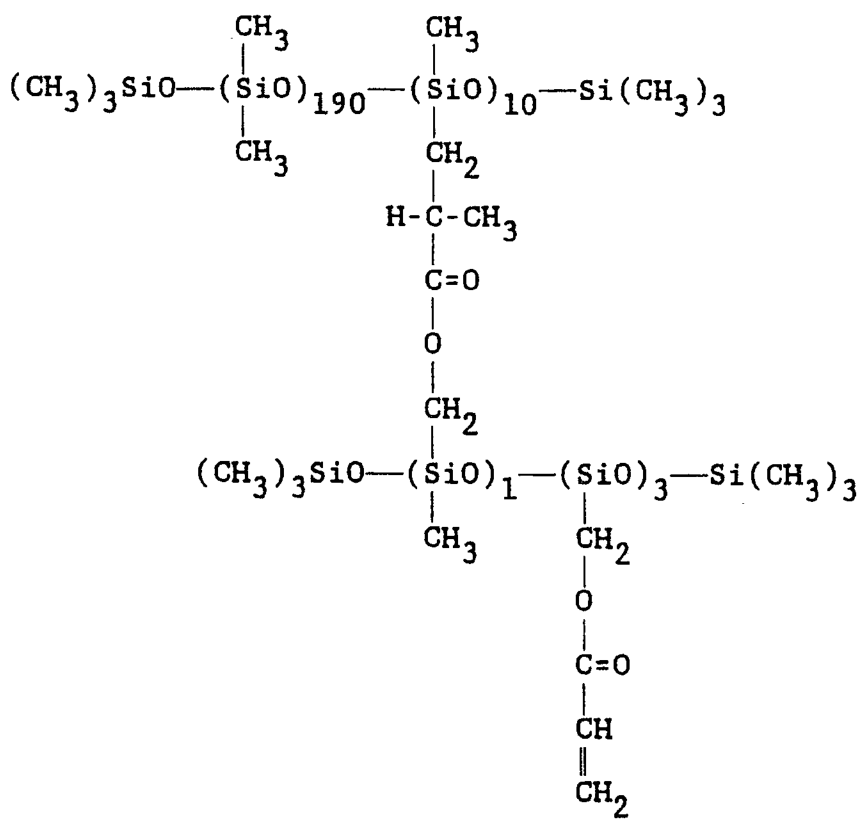

For comparison, a Sample 3B was synthesized in the form of organopolysiloxane having acryloxy groups equimolar with Sample 3A.

Sample 3B

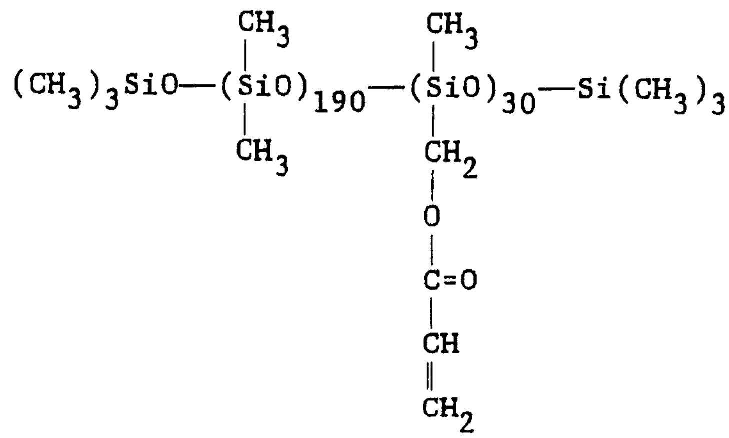

The curabilities of Samples 3A and 3B were investigated as in Example 1, and the obtained results are reported in Table 5.

TABLE 5

| Radiation-Curable Polymer | Radiation Dosage Required For Curing | |
|---|---|---|
| | UV (seconds) | electron beam (Mrad) |
| Sample 3A | 0.18 | 1.5 |
| Sample 3B | 1.25 | 5.8 |

Samples 3A and 3B were also coated at 1.0 g/m2 on PET film (38 micrometers), and the same type of PET film was overlaid on the coated surface followed in each case by a 3 Mrad electron beam exposure.

After this exposure, the two PET films in the laminate prepared using Sample 3A were found to be firmly adhered, but in the case of Sample 3B, they could be simply peeled apart by hand, and the peel surface was tacky.

## EXAMPLE 4

A Sample 4A, polyorganosiloxane whose main component had the following formula, was synthesized by conducting an addition reaction as in Example 1 between 5.0 g (containing 6.65 mmol methacryloxy groups) Organopolysiloxane C as synthesized in Example 3 and 49.6 g (containing 6.64 mmol SiH groups) dimethylhydrogensiloxy-terminated organohydrogenpoly-siloxane with an average degree of polymerization of 200 and a main chain constituted entirely of dimethylsiloxane units.

Sample 4A

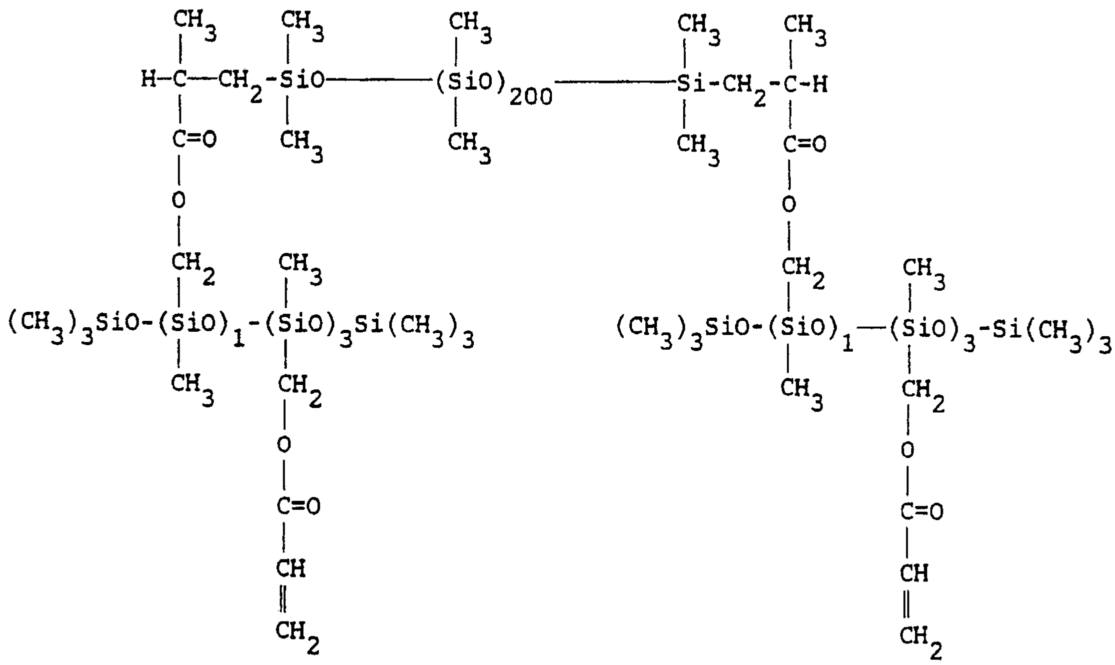

For comparison, a Sample 4B was synthesized in the form of dimethylacryloxymethylsiloxy-terminated dimethylpolysiloxane.

Sample 4B

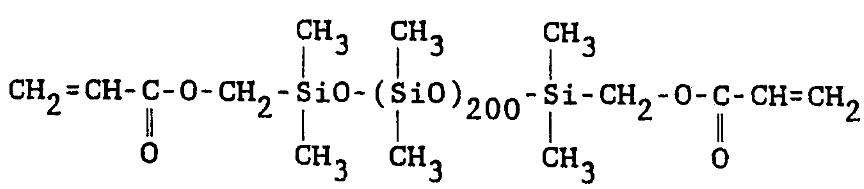

The curabilities of Samples 4A and 4B were investigated as in Example 1, and these results are reported in Table 6.

TABLE 6

| Radiation-Curable Polymer | Radiation Dosage Required For Curing | |
|---|---|---|
| | UV (seconds) | electron beam (Mrad) |
| Sample 4A | 0.45 | 5 |
| Sample 4B | >.10 (surface tack present) | 20 |

Moreover, a composition was prepared by the addition to Sample 4A of 2 wt% 2-methyl-2-propiophenone as photosensitizer, and this composition was coated to a thickness of 50 micrometers on an aluminum plate. Curing was then carried out by UV exposure for 0.5 seconds. The surface of the cured film thus obtained was completely dried, and the film evidenced rubbery elasticity.

Because the present invention's polyorganosiloxane is prepared by an addition reaction, in the

presence of a platinum-type catalyst, between the organopolysiloxane defined by in (A) and the organohydrogenpoly-siloxane defined in (B), the polyorganosiloxane (C) is obtained at high efficiencies.

Moreover, because the radiation-curable composition of the present invention is based on said polyorganosiloxane, this composition is characterized by a rapid cure upon exposure to radiation, while resisting curing inhibition even in the presence of oxygen, to give a cured material whose cured surface is slightly subject to time-dependent changes, and in particular whose peeling or release force undergoes little variation with the passage of time.

## Claims

1. A method for the preparation of an polyorganosiloxane comprising an addition reaction, in the presence of a platinum-type catalyst, between

(A) organopolysiloxane containing in each molecule at least 1 siloxane unit as represented by the formula

$R^1_aR^2SiO_{(3-a)/2}$

and at least 1 siloxane unit as represented by the formula

$R^3_bR^4SiO_{(3-b)/2}$

wherein $R^1$ and $R^3$ are independently a monovalent hydrocarbon group which does not contain aliphatically unsaturated bonds; $R^2$ and $R^4$ are independently an unsaturated group selected from the group consisting of acryloxy groups of the formula

$-R^5OC(O)CH=CH_2$ ,

methacryloxy groups of the formula

$-R^6OC(O)C(CH_3)=CH_2$,

and alkenyl groups wherein $R^5$ and $R^6$ are independently an alkylene group, with the proviso that in the molecules of (A) $R^2$ and $R^4$ are different types of groups; and a and b is 1 or 2 and

(B) organohydrogenpolysiloxane having in each molecule at least 1 siloxane unit as represented by

$R^7_cHSiO_{(3-c)/2}$

wherein $R^7$ is a monovalent hydrocarbon group which does not contain aliphatically unsaturated bonds, and c is 1 or 2,

producing (C) polyorganosiloxane which contains in each molecule at least one substructure as represented by

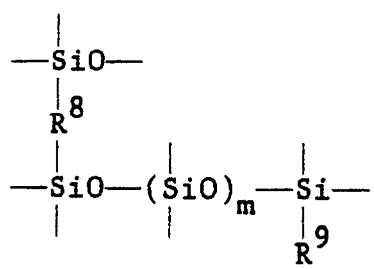

wherein $R^8$ is a divalent organic group generated by an addition reaction between the SiH group of organohydrogenpolysiloxane (B) and an unsaturated group of organopolysiloxane (A) selected from the group consisting of acryloxy groups of the formula

$-R^5OC(O)CH=CH_2$ ,

methacryloxy groups of the formula

$-R^6OC(O)C(CH_3)=CH_2$ ,

or alkenyl groups wherein $R^5$ and $R^6$ are alkylene groups;

$R^9$ is an unsaturated group selected from the group consisting of acryloxy groups of the formula

$-R^5OC(O)CH=CH_2$ ,

methacryloxy groups of the formula

$-R^6OC(O)C(CH_3)=CH_2$ ,

and alkenyl groups; and m is an integer with a value of at least zero.

2. A radiation-curable composition based on polyorganosiloxane according to claim 1.

4. A polyorganosiloxane comprising in each molecule at least one substructure as represented by

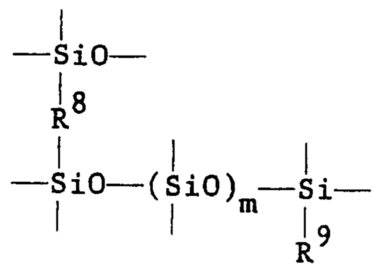

wherein $R^8$ is a divalent organic group generated by an addition reaction between the SiH group of organohydrogenpolysiloxane (B) and an unsaturated group of organopolysiloxane (A) selected from the group consisting of acryloxy groups of the formula
$-R^5OC(O)CH=CH_2$ ,
methacryloxy groups of the formula
$-R^6OC(O)C(CH_3)=CH_2$ ,
or alkenyl groups wherein $R^5$ and $R^6$ are alkylene groups;
$R^9$ is an unsaturated group selected from the group consisting of acryloxy groups of the formula
$-R^5OC(O)CH=CH_2$ ,
methacryloxy groups of the formula
$-R^6OC(O)C(CH_3)=CH_2$ ,
and alkenyl groups; and m is an integer with a value of at least zero.

5. The polyorganosiloxane in accordance with claim 10 in which the substructure is represented by the formula

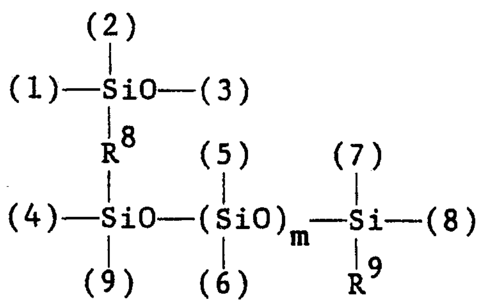

in which (1) is bonded to $R^7$ or an oxygen atom, (2) is bonded to $R^7$, (3) is bonded to a silicon atom forming the siloxane chain, (4) and (7) are $R^1$ or $R^3$, (5), (6), (8), and (9) are either $R^1$, $R^3$ or is bonded to an oxygen atom to form a siloxane chain, and (8) and (9) may form a cyclic via an oxygen atom or an organopolysiloxanylene group.